# EUROPEAN PATENT APPLICATION

(11) **EP 2 650 344 A1**
(43) Date of publication of application: **16.10.2013**
(21) Application number: 10860422.4
(22) Date of filing: 08.12.2010
(51) Int. Cl.: C10G 2/00, C01B 3/02, C25B 1/04, C25B 1/10, C25B 3/04

(54) **FUEL PRODUCTION SYSTEM**

(71) Applicant: Toyota Jidosha Kabushiki Kaisha, Toyota-shi, Aichi 471-8571 (JP)
(72) Inventor: SHITARA, Masaki, Toyota-shi Aichi 471-8571 (JP); OHKI, Takumi, Toyota-shi Aichi 471-8571 (JP)
(74) Representative: TBK
(86) International application number: PCT/JP2010/072026
(87) International publication number: WO 2012/077198

(57) **Abstract**

The present invention relates to a fuel manufacturing system and has an object to provide a fuel manufacturing system which can simplify in term of the system construction. An electrolytic solution having a property of absorbing CO₂ is used in the system. Therefore, a mixed gas can be generated directly with the electrolytic solution in which CO₂ has absorbed. In short, a CO₂ absorbing process is only needed to execute, which is shown in Fig. 6. Thus, the mixed gas generating process can be simplified as compared to a system including the CO₂ releasing process (Fig. 4, 5). And the system construction can be downsized since a device for the CO₂ releasing process can be omitted.

## Description

### Technical Field

The present invention relates to a fuel manufacturing system. More particularly, the present invention relates to a fuel manufacturing system for synthesizing the fuel from H₂ and CO generated by electrolysis.

### Background Art

Fossil fuels including petroleum, coal, natural gas and the like are used as a material for generating heat or electricity, and fuels for transportation so as to support the modern energy consumption society. However, such fossil fuels are exhaustible fuels and their reserves are limited. Thus, it is needless to say that preparation is needed for depletion of the fossil fuels. Moreover, emissions of CO₂ caused by combustion of the fossil fuels into the atmosphere are known to be one of the factors which cause global warming. Thus, reduction of CO₂ emissions has become a recent task.

As a means for solving these problems, an alternative fuel using CO₂ as a material has been examined. For example, Patent Document 1 discloses a system for manufacturing hydrocarbon fuel (HC) using CO₂ as a material. This system includes an electrolytic cell having an oxygen ion conductive film composed of a solid oxidized electrolyte as well as a cathode and an anode arranged on the both surfaces the electrolyte, respectively, so that HC is synthesized from a material gas generated by using this electrolytic cell.

A specific manufacturing method of HC in the above system is as follows. First, while electric power and heat are supplied to the electrolytic cell, CO₂ gas and steam are supplied to the cathode, and carbon monoxide (CO) gas and hydrogen (H₂) gas which become material gases are generated on this cathode, respectively. Subsequently, the generated material gas is collected from the electrolytic cell for reacting in a known manufacturing device which develops Fischer-Tropsch reaction (FT reaction) so as to obtain HC.

### Related Art Literature

### Patent Documents

Patent Document 1: JP-A-2009-506213
Patent Document 2: JP-A-2010-053425

### Non-Patent Documents

Non-Patent document 1: Satoshi Kaneco et al., "Electrochemical reduction of CO2 on Au in KOH + methanol at low temperature" Journal of Electroanalytical Chemistry 441 (1998) 215-220
Non-Patent document 2: Guoying Zhao et al. "Electrochemical reduction of supercritical carbon dioxide in ionic liquid 1-n-butyl-3-methylimidazolium hexafluorophosphate" J. of Supercritical Fluids 32 (2004) 287-291

### Summary of the Invention

### Problem to be Solved by the Invention

In the system of the above-described Patent Document 1, air, combustion gas or aerobic gas are supplied to the electrolytic cell after passing through a gas separator and separating CO₂ gas contained in the gas. In short, CO₂ gas is separated by the gas separator. Here, in order to separate CO₂ gas from other gas, the gas separator should have (i) a function to absorb any gases other than CO₂ gas, or (ii) a function to absorb only CO₂ gas. Since there are so many gases other than CO₂ gas, the function of the above-described (i) is not realistic. Thus, the gas separator should have the function of the above-described (ii).

Then, in order to supply CO₂ gas to the above-described electrolytic cell, the absorbed CO₂ in the gas separator needs to be released again. In order to release the absorbed CO₂ gas again, however, a device for the release or the like would be needed. Therefore, the system of the above-described Patent Document 1 leads to problems that the gas separator construction becomes complex and the system construction becomes large.

The present invention was made in order to solve the above mentioned problem. It is an object of the present invention to provide a fuel manufacturing system which can simplify the system construction.

### Means for Solving the Problem

To achieve the above-described purpose, a first aspect of the present invention is a fuel manufacturing system, comprising:
an electrolysis device for generating carbon monoxide and hydrogen by electrolyzing carbon dioxide and water respectively; and
a fuel synthesizing device for synthesizing hydrocarbon fuel, by occurring Fischer-Tropsch reaction, from carbon monoxide and hydrogen which are generated in the electrolysis device, wherein
the electrolysis device comprises electrolytic solution having a property of absorbing carbon dioxide therein.

A second aspect of the present invention is the fuel manufacturing system according to the first aspect of the present invention, wherein
said electrolytic solution has protonic conductivity.

A third aspect of the present invention is the fuel manufacturing system according to the first or the second aspect of the present invention, wherein
ionic liquid is used as said electrolytic solution.

A forth aspect of the present invention is the fuel manufacturing system according to the third aspect of the present invention, wherein
said ionic liquid includes at least one type of cation expressed in the following formulas (1) to (6) and at least one type of anion expressed as PF₆⁻, BF₄⁻, CF₃SO₃⁻, CF₃CF₂SO₃⁻, (CF₃SO₂)₂N⁻, (CF₃CF₂SO₂)₂N⁻, (CF₃CO)₂N⁻, (CF₃SO₂)N(COCF₃)⁻, and FSO₂NSO₂F⁻.

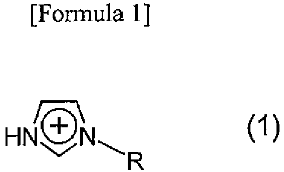

(In the formula (I), R represents organic group which may have primary amino group and/or secondary amino group.)

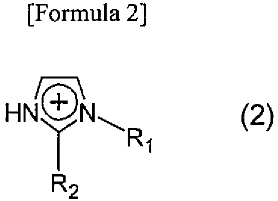

(In the formula (2), R₁ represents organic group which may have primary amino group and/or secondary amino group, or hydrogen. R₂ represents organic group which may have primary amino group and/or secondary amino group.)

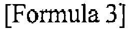

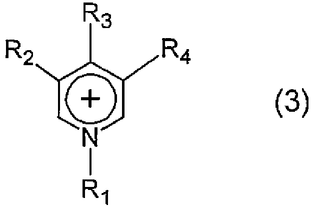

(In the formula (3), R₁, R₂, R₃ and R₄ may be the same or different each other. R₁, R₂, R₃ or R₄ represents organic group which may have primary amino group and/or secondary amino group, or hydrogen.)

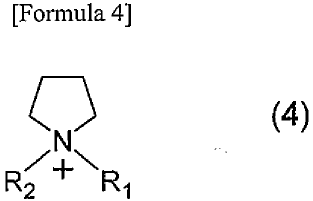

(In the formula (4), R₁ and R₂ may be the same or different each other. R₁ or R₂ represents organic group which may have primary amino group and/or secondary amino group, or hydrogen.)

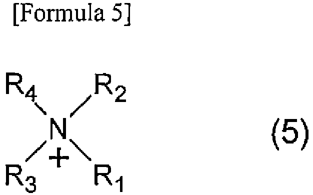

(In the formula (5), R₁, R₂, R₃ and R₄ may be the same or different each other. R₁, R₂, R₃ or R₄ represents organic group which may have primary amino group and/or secondary amino group, or hydrogen.)

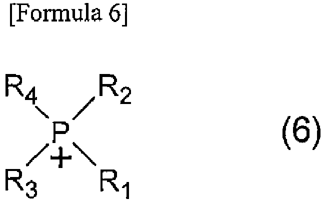

(In the formula (6), R₁, R₂, R₃ and R₄ may be the same or different each other. R₁, R₂, R₃ or R₄ represents organic group which may have primary amino group and/or secondary amino group, or hydrogen.)

A fifth aspect of the present invention is the fuel manufacturing system according to any one of the first aspect to the forth aspect of the present invention, wherein
said electrolysis device comprises a electrolytic cell comprising a cathode room filled with said electrolytic solution, an anode room filled with water, a proton-conducting separating membrane for separating said anode room and said cathode room.

### Advantages of the Invention

According to the first aspect of the present invention, electrolysis can be performed with the electrolytic solution having a property of absorbing CO₂. Therefore, equipments necessary for separating CO₂ gas in the air or the like from other gas and releasing again can be omitted. And thus, the system construction can be downsized.

According to the second aspect of the present invention, the use of the electrolytic solution having protonic conductivity makes it possible for proton to enhance its mobility, and thus the generation of hydrogen can be encouraged in electrolysis. According to the third or the forth aspect of the present invention, since the ionic liquid is used as the electrolytic solution, the ionic liquid's nature of liquid salt at ordinary temperature can be used. Therefore, CO and H₂ can be easily generated by electrolysis under room temperature condition.

According to the fifth aspect of the present invention, the proton-conducting separating membrane makes it possible to prevent the electrolytic solution in the cathode room and water in the anode room from mixing. When the proton-conducting separating membrane can prevent the mixing, the CO₂ concentration or proton concentration in the cathode room, or the control of the water volume in the anode room can be controlled easily. Therefore, a ratio of CO to H₂ generated in the cathode room can be easily adjusted.

### Brief Description of Drawings

Fig. 1 is a schematic diagram of a system configuration according to an embodiment.
Fig. 2 is a schematic diagram of an electrolysis device 10 used in the embodiment.
Fig. 3 is a diagram for explaining a brief overview of a HC synthesizing process with the system of the embodiment.
Fig.4 is a diagram for explaining a flow of a mixed gas generating process for a comparison purpose with this embodiment.
Fig.5 is a diagram for explaining a flow of a mixed gas generating process for a comparison purpose with this embodiment.
Fig.6 is a diagram for explaining a flow of a mixed gas generating process of this embodiment.

### Mode for Carrying Out the Invention

### [Description of a system configuration]

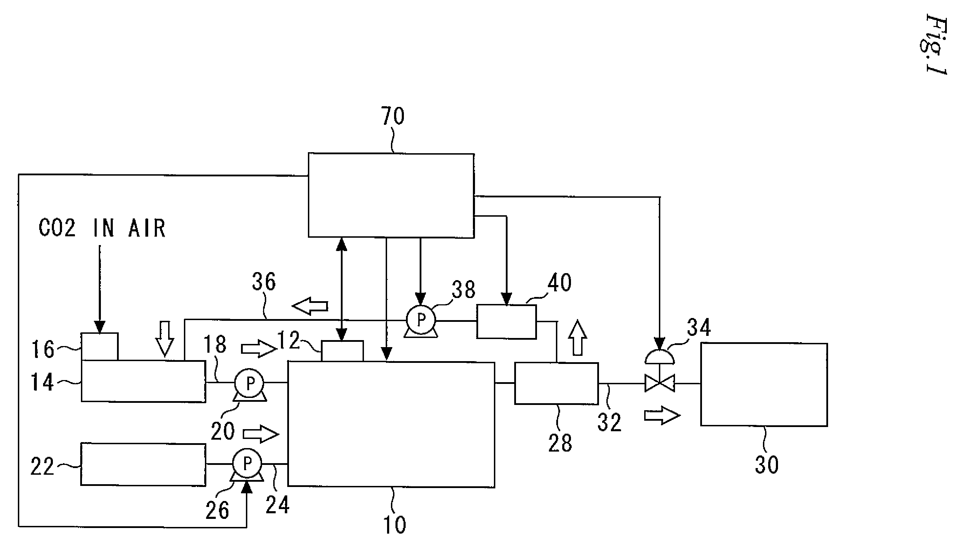

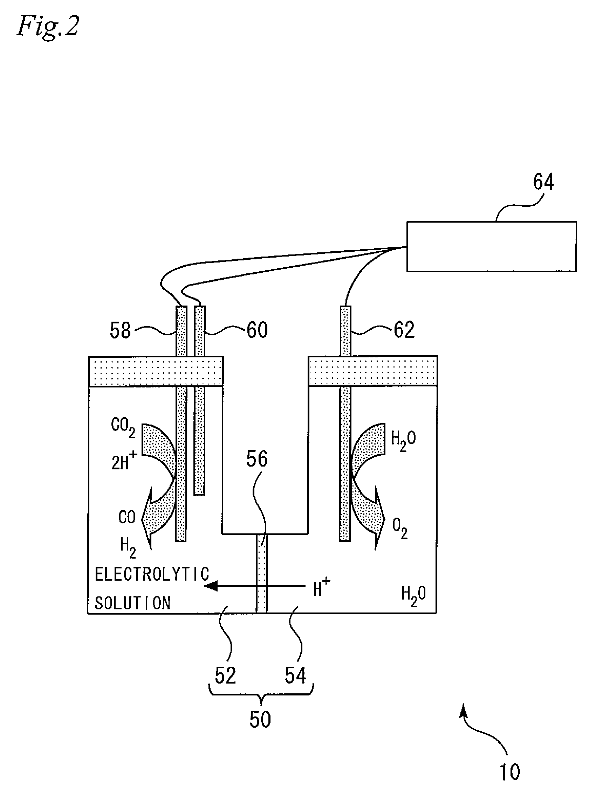

An embodiment of the present invention will be described below with reference to Figs. 1 to 5. In this embodiment, a system for manufacturing a fuel to be supplied to an internal combustion by using natural energy will be explained as an example. Fig. 1 is a schematic diagram of a system configuration according to this embodiment. The system illustrated in Fig. 1 comprises an electrolysis device 10 in which CO gas and H₂ gas are generated simultaneously by electrolysis. Electrolysis device 10 is a device for electrolyzation equipped with a thermal control device 12 for controlling the internal temperature of the electrolysis device 10 within a prescribed temperature range. Detailed configuration of the electrolysis device 10 will be described in the description of Fig. 2.

On the upstream of the electrolysis device 10, an electrolytic solution tank 14 filled with an electrolytic solution having a property of absorbing CO₂ is provided. The electrolytic solution tank 14 comprises an air introduction device 16. The air introduction device 16 comprises a compressor (not shown) and is configured to blow air at prescribed pressure into the electrolytic solution in the electrolytic solution tank 14. This leads to maintain the CO₂ concentration of the electrolytic solution in the electrolytic solution tank 14 constant (e.g., CO₂ saturation) at all times. The electrolytic solution tank 14 is connected to the electrolysis device 10 through a flow path 18. On the flow path 18, liquid pump 20 is provided. The liquid pump 20 is configured to supply the electrolytic solution stored in the electrolytic solution tank 14 into the flow path 18 at prescribed pressure.

On the upstream of the electrolysis device 10, a water tank 22 filled with water is provided. The water tank 22 is connected to the electrolysis device 10 through a flow path 24. On the flow path 24, liquid pump 26 is provided. The liquid pump 26 is configured to supply the water stored in the water tank 22 into the flow path 24 at prescribed pressure.

Meanwhile, a gas-liquid separator 28 is provided on the downstream of the electrolysis device 10. As will hereinafter be described, CO, H₂ and H₂O are generated in a cathode room of the electrolysis device 10. These products are discharged from the electrolysis device 10 in a mixed state with the electrolytic solution, and then pumped into the gas-liquid separator device 28, thereby the gas and the liquid are separated.

On the downstream of the gas-liquid separator device28, a FT reaction device 30 which can synthesize HC from CO and H₂ is provided. The FT reaction device 30 is connected to the gas-liquid separator device 28 through a flow path 32. On the flow path 32, a mixed gas valve 34 whose opening degree is configured to be controllable is provided. The mixed gas valve 34 includes a solenoid valve etc., and its opening degree is controlled depending on control signals. By opening the mixed gas valve 34, the gas-liquid separator 28 and the FT reaction device 30 are connected each other and then a mixed gas consisting of CO and H₂ which was separated in the gas-liquid separator device 28 flows into the FT reaction device 30.

The gas-liquid separator 28 is connected to the electrolytic solution tank 14 through a flow path 36. On the flow path 36, a condensation device 38 and a liquid pump 40 are provided. The condensation device 38 comprises a heating device and a cooling device therein. The condensation device 38 is configured to heat the electrolytic solution so as to remove an amount of water equivalent to the generated water therefrom, and to cool the electrolytic solution to a temperature close to the temperature of the electrolytic solution in the FT reaction device 30 thereafter. The liquid pump 40 is configured to supply the cooled electrolytic solution into the flow path 36 at a prescribed pressure. The liquid pumps 20, 40 function as circulation pumps for circulating the electrolytic solution through the electrolytic solution tank 14, the electrolysis device 10, the gas-liquid separator device 28 and the condensation device 38.

The system of this embodiment further comprises a control unit 70. On the input side of the control unit 70, the above-mentioned thermal control device 12 is connected. On the output side of the control unit 70, the electrolysis device 10, the thermal control device 12, the air introduction device 16, the liquid pump 20, 26 and 40, the mixed gas valve 34 and the condensation device 38 are connected.

### [Description of a configuration of the electrolysis device 10]

Next, the configuration of the electrolysis device 10 will be described in detail with reference to Fig. 2. Fig. 2 is a schematic diagram of the electrolysis device 10 in Fig. 1. The electrolysis device 10 comprises a three-electrodes-type electrolytic cell 50. The electrolytic cell 50 comprises a cathode room 52 filled with the electrolytic solution, an anode room 54 filled with water, and a separating membrane 56 for separating the cathode room 52 and the anode room 54.

To the cathode room 52, the electrolytic solution tank 14 and the gas-liquid separator device 28 in Fig. 1 are connected. In the cathode room 52, a working electrode (WE) 58 and a reference electrode (RE) 60 are provided. The WE 58 corresponds to a cathode of the electrolytic cell 50, and its body is made of a metal (e.g., Pt) which is less likely to reduce CO₂ during electrolysis. On a part of this body's surface, a CO₂ reduction catalyst which reduces CO₂ to CO selectively during the electrolysis is provided.

To the anode room 54, the water tank 22 in Fig. 1 is connected. In the anode room 54, a counter electrode (CE) 62 is provided. CE 62 corresponds to an anode of the electrolytic cell 50, and its body is made of a metal (e.g., Au, Pt) which is not resolved during electrolysis. A commonly-used electrolyte (supporting electrolyte) may be added to the anode room 54.

The separating membrane 56 has a function for transporting proton from the anode room 54 side to the cathode room 62 side, and is made of polyelectrolyte resin such as NAFION (registered trademark). The separating membrane 56 may be omitted.

The electrolysis device 10 comprises a potentiostat 64. The potentiostat 64 is connected to the WE 58, RE 60, CE 62 and the control unit in Fig. 1. The potentiostat 64 controls a current value which flows between the WE 58 and the CE 62 so as to hold a voltage between the WE 58 and the RE 60 at a set value.

Here, electrolysis conducted by the electrolysis device 10 will be described. When the potentiostat 64 is controlled so that an electric current flow is carried between the WE 58 and the CE 62, electrochemical reactions of the following formulas (A) to (C) occur at the WE 58 and the CE62:

WE 58: CO₂ + 2H⁺ + 2e⁻ → CO + H₂O (A)

2H⁺ + 2e⁻ → H₂ (B)

CE 62: 2H₂O → O₂ + 4H⁺ + 4e⁻ (C)

The reaction of the formula (A) occurs at the site where the CO₂ reduction catalyst on the WE 58 contacts with the electrolytic solution. The reaction of the formula (B) occurs at the site where the body of the WE 58 contacts with the electrolytic solution. The reaction of the formula (C) occurs at the site where the CE 62 contacts with water.

When water is supplied to the anode room 54 by driving the liquid pump 26 while an electric current flow is being carried between the WE 58 and the CE 62, proton can be continuously generated on the CE 62 (the above-described formula (C)). On this occasion, additionally, when the electrolytic solution is supplied to the cathode room 52 by driving the liquid pump 20, CO₂ and proton can be supplied to the cathode room 52 continuously. Therefore, according to the system, CO and H₂ can be continuously generated on the WE 58 (the above-described formula (A) and (B)). Since CO and H₂ have low solubility in the electrolytic solution, almost all of the generated CO and H₂ are present in a gaseous state.

When the generated CO and H₂ are collected so as to occur the FT reaction, HC can be manufactured as an alternative fuel for the fossil fuel. It is needless to say, here, that HC is preferably manufactured efficiently from a material stage. In this connection, it has been known that high energy efficiency of the FT reaction is achieved when a mixing ratio between CO and H₂ is set to CO / H₂ = 1/2. In this embodiment, considering the energy efficiency, a voltage between the WE 58 and the RE 60 is set so that a ratio in a generation stage is CO / H₂ = 1/2.

### [Brief overview of a HC manufacturing process]

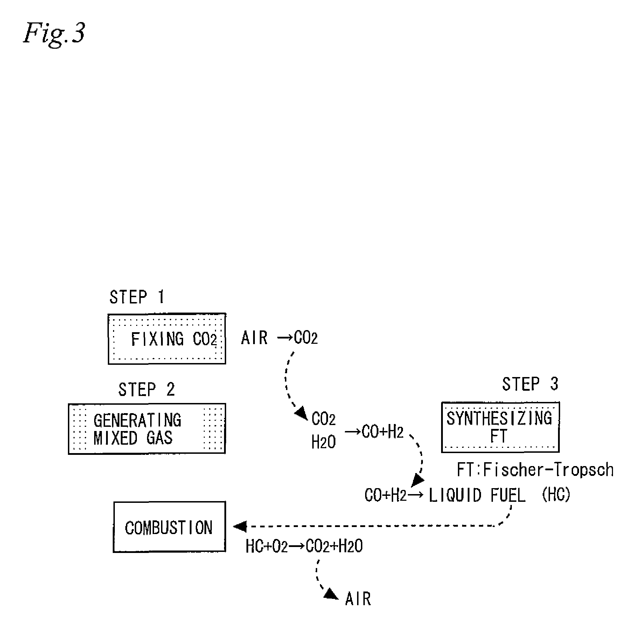

A HC manufacturing process conducted by the system will be described with reference to Fig. 3. As shown in Fig. 3, the HC manufacturing process conducted by the system includes three steps (STEP 1 to STEP 3).

STEP 1 is a CO₂ fixing step. STEP 1 is executed by controlling the air introduction device 16 so that air is blown into the electrolytic solution in the electrolytic solution tank 14 in Fig. 1. STEP 2 is a mixed gas generating process. STEP 2 is executed by driving the liquid pumps 20, 26 and 40 while an electric current flow is carried between the WE 58 and the CE 62. STEP 3 is a FT synthesizing process. STEP 3 is executed so that HC is synthesized from the mixed gas in the FT reaction device 30.

The manufactured HC through STEP 1 to STEP 3, for example, is supplied to an intake system of an internal combustion engine so as to be burned. CO₂ generated by the burning of the HC is emitted as exhaust gas into the atmosphere. Here, if it returns to STEP 1 again, the emitted CO₂ can be fixed into the electrolytic solution. And here, if an electric energy necessary to drive the present system is covered by natural energy (e.g., solar power, solar thermal power, wind power, tidal power, geothermal power and hydro power), a carbon-neutral fuel manufacture can be achieved and this will contribute to realize so-called sustainable mobility.

### [Advantages of the HC manufacturing process in the system]

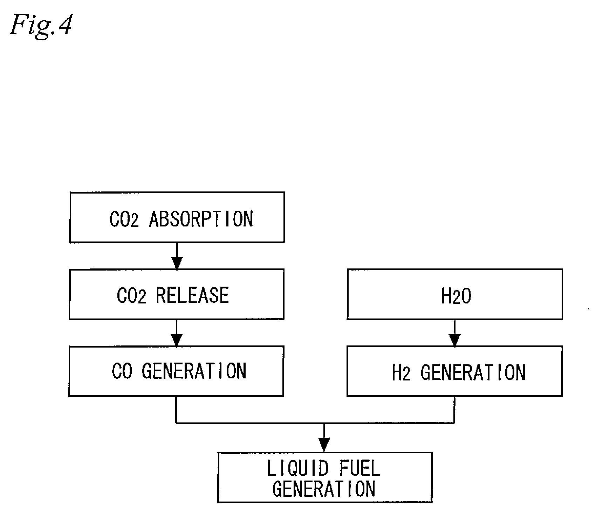

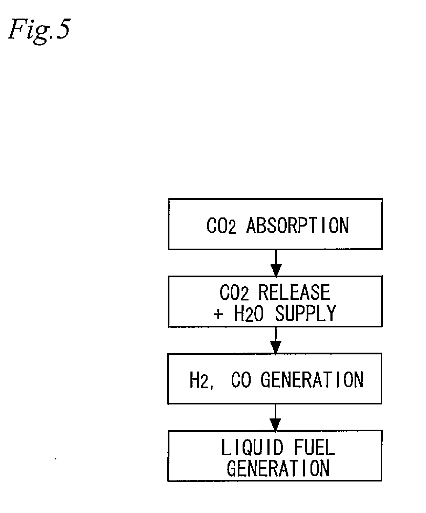

As mentioned previously, the electrolytic solution having a property of absorbing CO₂ is used in the system. This reason will be described with reference to Figs 4 to 6. First, a flow of a mixed gas generating process conducted in a case where the system in the above-described Patent Document 1 (JP-A-2009-506213) will be described with reference to Figs. 4 to 5. Patent Document 1 describes two systems. Fig. 4 and Fig. 5 correspond to the flows conducted by the first system and the second system, respectively. For a detailed configuration of the first system or the second system, see Patent Document 1.

Through the flow conducted by the first system, CO is generated in an electrolytic cell whereas H₂ is generated in a cathode room. So, as shown in Fig. 4, the mixed gas generating process includes a CO generating process and a H₂ generating process, which are independent each other. CO₂ used to manufacture CO is generated in an anode room of an electrolysis device in which H₂ is generated. In this anode room, O₂ is also generated as well as CO₂. Therefore, the CO₂ generated in the electrolysis device must be once absorbed, and then released so as to be supplied to the electrolytic cell, in order to generate CO. Thus, the CO generating process further includes a CO₂ absorbing process and a CO₂ releasing process, as shown in Fig. 4.

Meanwhile, the mixed gas can be generated in the cathode of the electrolytic cell according to the flow conducted by the second system. However, CO₂ included in air, exhaust gas or the like is used as one for manufacturing CO. Thus, the CO₂ must be once absorbed, and then released so as to be supplied to the electrolytic cell. Therefore, the CO generating process includes a CO₂ absorbing process and a CO₂ releasing process, as shown in Fig. 5.

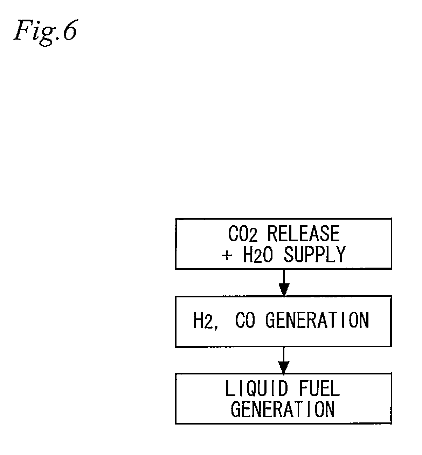

In this regard, the present system uses the electrolytic solution having a property of absorbing CO₂. Therefore, the mixed gas can be generated directly from the electrolytic solution in which CO₂ has absorbed. In short, a CO₂ absorbing process is only needed to execute, as shown in Fig. 6. Thus, the mixed gas generating process can be simplified as compared to one including the CO₂ releasing process, which is conducted by the first system or the second system. Further, the system construction can be downsized since a device for the CO₂ releasing process can be omitted.

### [Electrolytic solution]

Next, the electrolytic solution used in the system will be described. The electrolytic solution is a salt in the liquid state at room temperature (preferably, 0 centigrade degrees or higher) which is formed by a molecular makeup with cation site and anion site at ordinary temperatures and pressures (25 centigrade degrees, 1 atm). This electrolytic solution expresses the property of absorbing CO₂ by physical adsorption or chemical adsorption. Physical adsorption results from electrostatic interaction between the electrolytic solution and CO₂. A salt being capable of expressing physical adsorption includes the one with fluorine atom on its anion site. Meanwhile, chemical adsorption results from a formation of a covalent bonding (an amide bond) between the electrolytic solution and CO₂. A salt being capable of expressing chemical adsorption includes a primary amino group (-NH₂) and/or a secondary amino group (-NH-) on its cation site.

A preferable salt used as the electrolytic solution in the system includes ionic liquid below. The ionic liquid is an organic salt being in molten state without crystallizing even at ordinary temperature, and is formed by a molecular makeup with cation site and anion site. Because of its quite low vapor pressure and its property of absorbing CO₂, the ionic liquid is preferably used in the system.

The cation, which is included in the ion liquid, corresponds to an imidazolium derivative expressed in the following formula (1) or (2), a pyridinium derivative expressed in the following formula (3), a pyrrolidinium derivative expressed in the following formula (4), an ammonium derivative expressed in the following formula (5) and a phosphonium derivative expressed in the following formula (6). More than one of these cations may be simultaneously used.

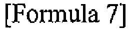

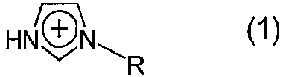

(In the formula (1), R represents organic group which may have primary amino group and/or secondary amino group. The organic group preferably includes a hydrocarbon group and more preferably includes a C1-C20 alkyl group or arylalkyl group.)

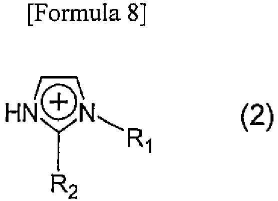

(In the formula (2), R₁ represents organic group which may have primary amino group and/or secondary amino group, or hydrogen. R₂ represents organic group which may have primary amino group and/or secondary amino group. In the case that R₁ or R₂ represents the organic group, the organic group preferably includes a hydrocarbon group and more preferably includes a C1-C20 alkyl group or arylalkyl group.)

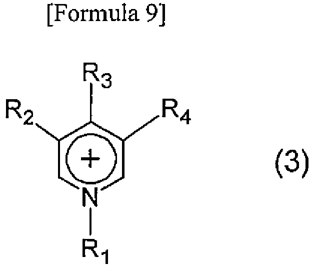

(In the formula (3), R₁, R₂, R₃ and R₄ may be the same or different each other. R₁, R₂, R₃ or R₄ represents organic group which may have primary amino group and/or secondary amino group, or hydrogen. In the case that R₁ to R₄ represent the organic group, the organic group preferably includes a hydrocarbon group and more preferably includes a C1-C20 alkyl group or arylalkyl group.)

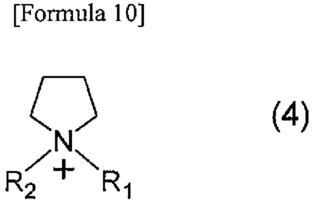

(In the formula (4), R₁ and R₂ may be the same or different each other. R₁ or R₂ represents organic group which may have primary amino group and/or secondary amino group, or hydrogen. In the case that R₁ or R₂ represents the organic group, the organic group preferably includes a hydrocarbon group and more preferably includes a C1-C20 alkyl group or arylalkyl group.)

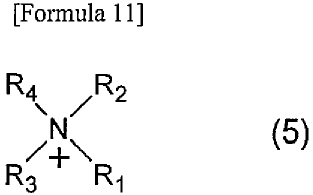

(In the formula (5), R₁, R₂, R₃ and R₄ may be the same or different each other. R₁, R₂, R₃ or R₄ represents organic group which may have primary amino group and/or secondary amino group, or hydrogen. In the case that R₁ to R₄ represent the organic group, the organic group preferably includes a hydrocarbon group and more preferably includes a C1-C20 alkyl group or arylalkyl group.)

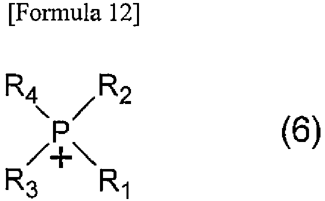

(In the formula (6), R₁, R₂, R₃ and R₄ may be the same or different each other. R₁, R₂, R₃ or R₄ represents organic group which may have primary amino group and/or secondary amino group, or hydrogen. In the case that R₁ to R₄ represent the organic group, the organic group preferably includes a hydrocarbon group and more preferably includes a C1-C20 alkyl group or arylalkyl group.)

The electrolytic solution used in the system preferably has protonic conductivity as well as the property of absorbing CO₂ at the same time. By having protonic conductivity, the mobility of proton in the cathode room 54 can be enhanced more and thus, the generation amount of H₂ at the WE 58 can be increased. A salt being capable of expressing protonic conductivity includes, for example, a protonic salt which consists of Brønsted acid (HA) and base (B), (AH + B → [BH] [A]). The protonic salt specifically corresponds to the one that R₁ is hydrogen in the formulas (2) to (6).

The anion, which is included in the ion liquid, corresponds to PF₆⁻, BF₄⁻, CF₃SO₃⁻, CF₃CF₂SO₃⁻, (CF₃SO₂)₂N⁻, (CF₃CF₂SO₂)₂N⁻, (CF₃CO)₂N⁻, (CF₃SO₂)N(COCF₃)⁻, and FSO₂NSO₂F⁻. More than one of these anions may be simultaneously used.

Thus, according to the system of this embodiment, electrolysis can be performed with the above mentioned electrolytic solution. Therefore, the present system can simplify the mixed gas generating process as compared to the system conducting the CO₂ releasing process. And the system construction can be downsized since a device for the CO₂ releasing process can be omitted.

In this embodiment, the three-electrodes-type electrolytic cell 50 is used while the voltage between the WE 58 and the RE 60 is controlled by the potentiostat 64. However, a two-electrodes-type electrolytic cell in which the CE 62 also functions as the RE 60 can be used instead of the three-electrodes-type electrolytic cell 50. That is, any configurations can be applied as modified examples of the electrolysis device 10 of the embodiment as long as it can control the voltage applied between the WE 58 and the RE 60.

### Description of Reference Numerals

- 10: electrolysis device
- 12: thermal control device
- 14: electrolytic solution tank
- 16: air introduction device
- 18, 24, 32, 36: flow path
- 20, 26, 40: liquid pump
- 22: water tank
- 28: gas-liquid separator
- 30: FT reaction device
- 34: mixed gas valve
- 38: condensation device
- 50: electrolytic cell
- 52: cathode room
- 54: anode room
- 56: separating membrane
- 58: working electrode
- 60: reference electrode
- 62: counter electrode
- 64: potentiostat
- 70: control unit

## Claims

1. A fuel manufacturing system, comprising:
an electrolysis device for generating carbon monoxide and hydrogen by electrolyzing carbon dioxide and water, respectively; and
a fuel synthesizing device for synthesizing hydrocarbon fuel, by occurring Fischer-Tropsch reaction, from carbon monoxide and hydrogen which are generated in the electrolysis device, wherein
the electrolysis device comprises electrolytic solution having a property of absorbing carbon dioxide therein.

2. The fuel manufacturing system according to claim 1, wherein
said electrolytic solution has protonic conductivity.

3. The fuel manufacturing system according to claim 1 or 2, wherein
ionic liquid is used as said electrolytic solution.

4. The fuel manufacturing system according to claim 3, wherein
said ionic liquid includes at least one type of cation expressed in the following formulas (1) to (6) and at least one type of anion expressed as PF₆⁻, BF₄⁻, CF₃SO₃⁻, CF₃CF₂SO₃⁻, (CF₃SO₂)₂N⁻, (CF₃CF₂SO₂)₂N⁻, (CF₃CO)₂N⁻, (CF₃SO₂)N(COCF₃)⁻, and FSO₂NSO₂F⁻. 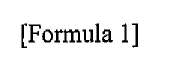 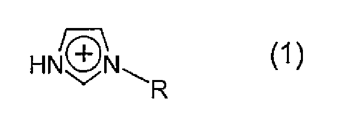 (In the formula (1), R represents organic group which may have primary amino group and/or secondary amino group.) 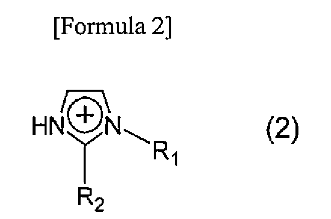 (In the formula (2), R₁ represents organic group which may have primary amino group and/or secondary amino group, or hydrogen. R₂ represents organic group which may have primary amino group and/or secondary amino group.) 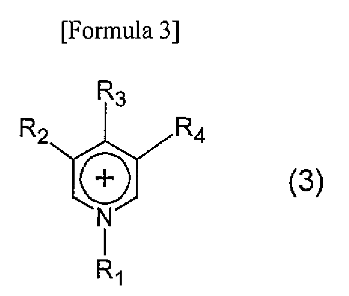 (In the formula (3), R₁, R₂, R₃ and R₄ may be the same or different each other. R₁, R₂, R₃ or R₄ represents organic group which may have primary amino group and/or secondary amino group, or hydrogen.) 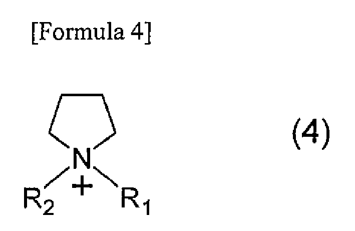 (In the formula (4), R₁ and R₂ may be the same or different each other. R₁ or R₂ represents organic group which may have primary amino group and/or secondary amino group, or hydrogen.) 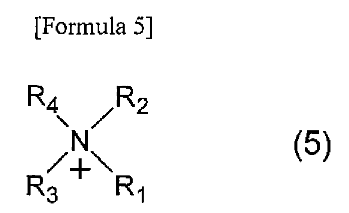 (In the formula (5), R₁, R₂, R₃ and R₄ may be the same or different each other. R₁, R₂, R₃ or R₄ represents organic group which may have primary amino group and/or secondary amino group, or hydrogen.) 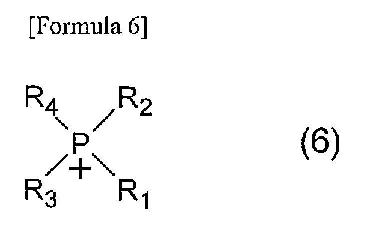 (In the formula (6), R₁, R₂, R₃ and R₄ may be the same or different each other. R₁, R₂, R₃ or R₄ represents organic group which may have primary amino group and/or secondary amino group, or hydrogen.)

5. The fuel manufacturing system according to any one of claims 1 to 4, wherein said electrolysis device comprises a electrolytic cell comprising a cathode room filled with said electrolytic solution, an anode room filled with water, a proton-conducting separating membrane for separating said anode room and said cathode room.
